# EUROPEAN PATENT APPLICATION

(11) **EP 3 501 717 A1**
(43) Date of publication of application: **26.06.2019**
(21) Application number: 16912878.2
(22) Date of filing: 30.09.2016
(51) Int. Cl.: B23K 9/095, B23K 9/16, G05D 7/06, F17D 5/02

(54) **SYSTEM FOR THE ELECTRONIC REGULATION OF THE FLOW OF PROTECTIVE GAS IN WELDING EQUIPMENT**

(30) Priority: 16.08.2016 BR 202016018807 U
(71) Applicant: Powermig Automação E Soldagem LTDA, 95032-471 Caxias do Sul (BR)
(72) Inventor: FOCHESATTO, Juarez, Caxias do Sul (BR)
(74) Representative: Pereira Garcia, João Luís
(86) International application number: PCT/BR2016/050242
(87) International publication number: WO 2018/032068

(57) **Abstract**

An electronic shielding gas flow regulator system applied in welding equipment, object of the present utility model, is described, which aims to solve the drawbacks described in the prior art by means of a MIG/MAG/TIG welding gas saving system which verifies through a current sensor (Shunt) (30) the current being used, sending this data to a software processing system (microcontroller) (20) which subsequently performs the gas release through a linear actuation valve (23) according to the welding current being measured, and the confirmation of the outlet flow is performed by a flowmeter sensor in order to guarantee accurate flow.

## Description

The present utility model describes an electronic shielding gas flow regulator system applied in welding equipment. More specifically, it comprises a MIG/MAG/TIG welding gas saving system that checks the current being used by a current sensor (Shunt), sending this data to a software processing system that later releases the gas according to the welding current being measured, and the confirmation of the outlet flow is performed by a flowmeter sensor in order to guarantee accurate flow.

The shielding gases used in the welding process have as their primary function the shielding of the fusing puddle, expelling the atmospheric gases from the region of the weld, mainly Oxygen, Nitrogen and Hydrogen, which are harmful gases to the welding process. In addition, the shielding gases still have functions related to weldability, penetration and small participation in the chemical composition of the fusing puddle, when active gases are used in welding.

The shielding gases may be of atomic origin such as Argon and Helium, or molecular like Co2. They are still divided as to composition, which may be simple containing only one type of gas, or they may be composed of mixtures, having two or more types of gases in their composition.

The shielding gas is injected throughout the welding, in a pre-regulated flow, through the gun nozzle or welding torch. The outflow of the shielding gas is regulated by the flowmeter and the regulator-pressure reducer. These enable constant gas delivery to the gun nozzle at a preset flow rate.

In the process of welding with shielding gas it is necessary to check the ideal gas outlet regulation for a reliable weld, it being important to check the excess gas and/or absence, as these factors can compromise the fusion quality of the metals. In addition, it is necessary to control and regulate the flow of shielding gases in order to reduce costs in welding processes.

Welding processes are extremely wasteful with regard to the definition of shielding gas flow rates. The cost of shielding gas is one of the most expensive elements in any welding process, and it is difficult for welders to set higher fluxes than necessary or recommended. Most equipment manufacturers offer flow control devices or accessories allowing set a maximum limit so that excessive flow rates cannot be used.

Most flow control equipment used with both cylinder and bulk system shielding gases is designed to operate at a nominal inlet pressure of between about 20 and 30 PSIG. Applications using pure carbon dioxide can operate at pressures of up to 50 PSIG. This means that whenever the welding torch is activated there is an initial pressure of 20 to 30 or 50 PSIG in the welding nozzle; this high static pressure causes a large gas amount to escape through the nozzle when the torch trigger is triggered.

To get a more quantitative idea, note the following: 1) the welding process requires 35 SCFH of argon, 2) the flowmeter installed and connected to the welding machine has a calibration pressure of 20 PSIG. Through a normal gas diffuser, with these definitions, the initial flow rates can easily reach or even exceed 180 SCFH of argon. Although the flow rate falls rapidly as the line pressure decreases due to atmospheric conditions, this still represents a flow rate 5 times higher than that required for the welding process. This happens every time the trigger is triggered. In some applications the trigger is triggered 200 to 300 times per hour, exponentially increasing the gas amount wasted.

In this sense, the state of the art presents several shielding gas flow control equipment applied in welding processes that aim to control and regulate this waste, where we can highlight the following document:
WO2009031902 discloses a shielding gas flow controller for an electric arc welding device for insertion into a shielding gas supply line between a shielding gas source and a shielding gas valve of the shielding electric arc welding device, the flow controller having a shielding gas inlet and a shielding gas outlet, a controllable gas valve connected between the shielding gas inlet and outlet, and having a control input, and a controller having a first input for receiving a welding signal representing an electric arc welding current of the welding device during a welding operation and a gas flow adjusting control means adapted to generate an adjustment output of flow of the welding signal and represented a desired shielding gas flow. The shielding gas flow controller further comprises an input pressure sensor connected to the shielding gas input and arranged to provide a shielding gas input pressure measurement to a second input of the controller means, and a output pressure sensor output connected to the shielding gas outlet and arranged to provide an output pressure measurement for a third input of the controller means.

This document mentioned primarily describes a shielding gas flow controller device that has a PWM solenoid valve actuation method. On the other hand, the equipment proposed in the present application for utility model presents a constructive and functional improvement to the products of the prior art, due to the system describe the use of a linear actuation valve that guarantees more efficiency to the process, an error information relay integrated to the control system and an online checking display of the constant gas amount in the passage flow, equipment being managed by a software (microcontroller) that allows controlling and monitoring the gas amount accumulated, the error being verified and allow to select the change of gas flow range, besides having in its adjustments the configuration of parameters of gas pre-flow and gas post-flow in order to guarantee the highest quality in the process of welding.

Thus, the electronic shielding gas flow regulator system applied in welding equipment, object of the present utility model comprises a MIG/MAG/TIG welding gas saving system that verifies through a current sensor (Shunt) the current being used, sending this data to a software processing system (microcontroller) that later performs the gas release according to the current of welding being measured.

Such features promote greater control and saving in the welding processes when compared with the flow regulators of the state of the art.

It is feature of the utility model an electronic shielding gas flow regulator system applied in welding equipment providing a software processing system that allows greater control and regulation in the welding process.

It is feature of the utility model an electronic shielding gas flow regulator system applied in welding equipment providing savings of 15% to 60% in gas consumption.

It is feature of the utility model an electronic shielding gas flow regulator system applied in welding equipment providing a current sensor (shunt) that verifies the current being used.

It is feature of the utility model an electronic shielding gas flow regulator system applied in welding equipment providing a linear actuation valve that guarantees greater efficiency to the process.

It is feature of the utility model an electronic shielding gas flow regulator system applied in welding equipment allowing the correction of the gas amount to be released is performed online, that is, the current determines the gas amount to be released.

It is feature of the utility model an electronic shielding gas flow regulator system applied in welding equipment providing an online verification display of the constant gas amount in the passage flow, the equipment being managed by a software that allows controlling and monitor the gas amount accumulated, the error being checked and allow to select the change of gas flow range.

In order to better describe the technical features of the electronic shielding gas regulator system applied in welding equipment, the following figures are presented:

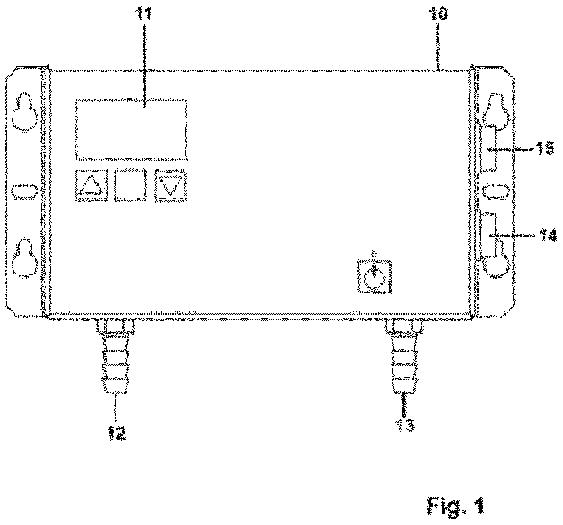

Figure 1 shows the front view of the electronic gas flow regulator equipment.

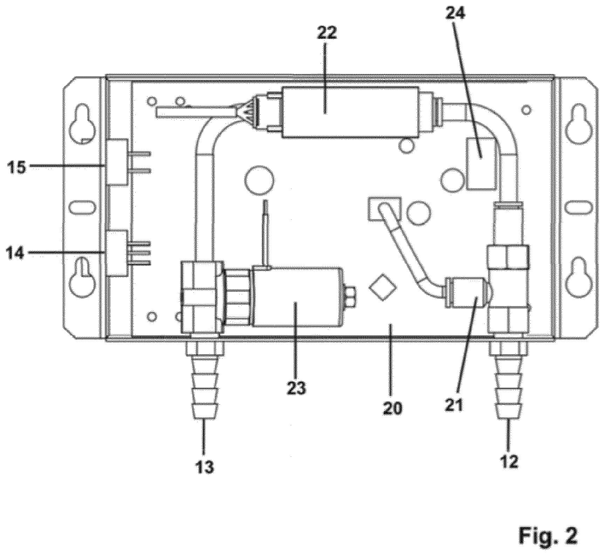

Figure 2 shows the rear view of the electronic gas flow regulator equipment without the rear cover detailing the internal components.

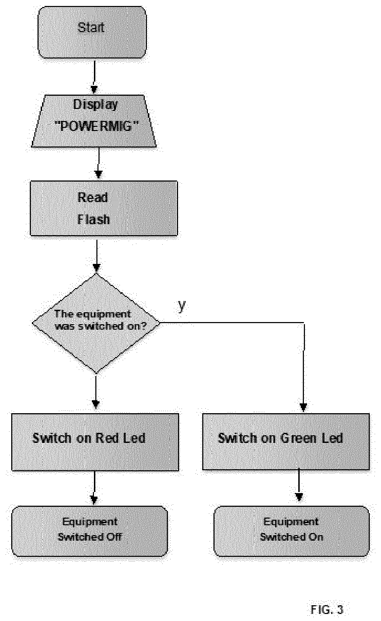

Figure 3 shows the operating flow diagram of the electronic gas flow regulator equipment.

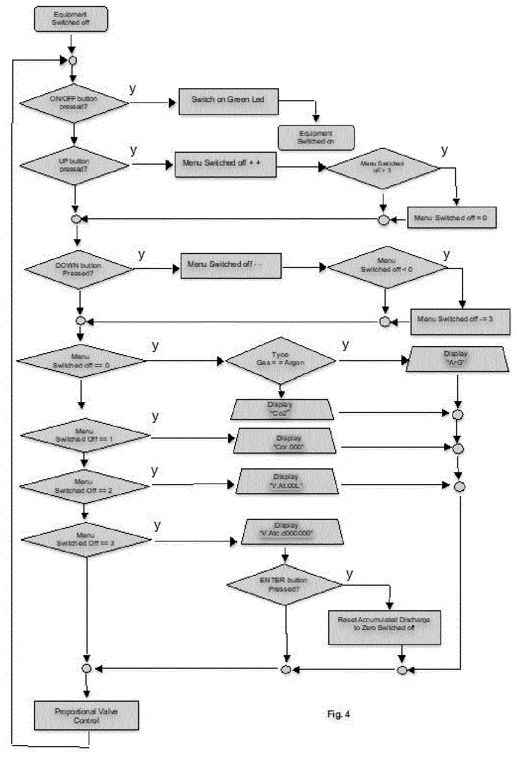

Figure 4 shows the operating flow diagram of the electronic gas flow regulator in switched on mode (online).

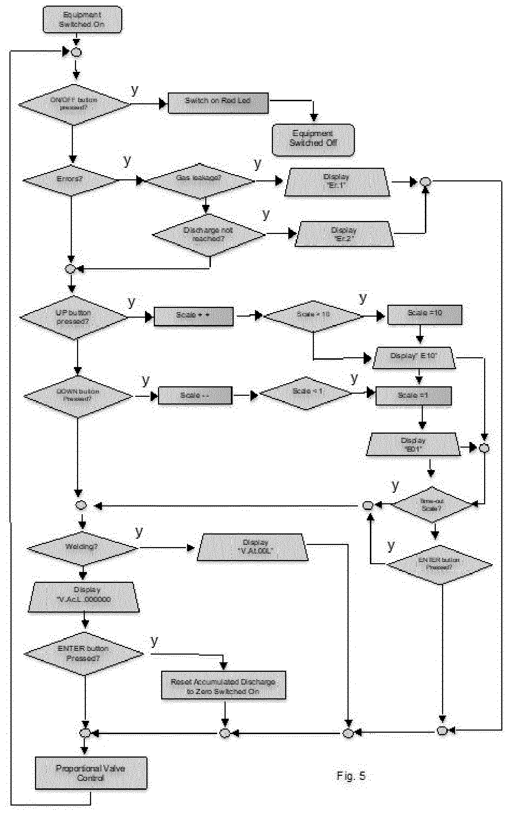

Figure 5 shows the operating flow diagram of the electronic gas flow regulator equipment in switched off mode (offline).

The electronic shielding gas flow regulator system applied in welding equipment, object of the present utility model, comprises a MIG/MAG/TIG welding gas saving system interconnected in the feed line between the gas and the welding equipment, having a base structure (10) provided by a numerical display (11) for online and offline verification of the gas amount passing at the exact moment and by inlet (12) and outlet (13) connections of the gas so as to allow controlling the gas amount that will be released or being directed to the welding equipment.

In the inner portion of the structure (10) there is arranged a microcontroller board (20) which performs the reading and identification of the straight connection (21), the flowmeter sensor (22) and the external current measuring sensor (30) to determine the gas amount should be released by the linear actuating valve (23) arranged adjacent the outlet connection (13).

Microcontroller (20) is provided with specific software which performs the gas inlet and outlet readings either online or offline. It allows analyzing the gas amount entering the equipment and comparing it with the values of current and flow, in order to forward this information to the linear actuating valve (23) that promotes the gas release when the equipment is online.

Microcontroller board (20) describes a relay (24) for error reporting and equipment locking when there is a lack or failure of gas, leakage or low pressure, causing the equipment to stop immediately, ensuring greater safety and avoiding malfunction.

The inlet connection (12) directs the gas to the flowmeter sensor (22) and through a straight connection (21) directs the gas to the microcontroller (20), allowing the microcontroller (20) to read the gas amount that is entering the equipment, either in online or offline mode.

The flowmeter sensor (22) and the straight connection (21) enable the microcontroller (20) to accurately identify the gas amount entering the equipment by displaying this information to the user through the numerical display (11) which presents the information both in online mode and offline mode.

The outlet connection (13) is controlled by a linear actuating valve (23) which promotes the gas release according to the information emitted by the microcontroller (20), said microcontroller (20) which performs a flow calculation through the parameters received by the flowmeter sensor (22) and straight connection (21) compared to the current calculation emitted to the microcontroller via the current sensor (shunt).

The current sensor (shunt) (30) is arranged adjacent to the current output of the welding equipment and is connected to the microcontroller (20) adjacent to the contact port (14), allowing the microcontroller (20) to receive the current information of the welding equipment and performs the necessary calculations (flow x current) to determine the gas amount to be released for the welding process.

The software interconnected to the microcontroller (20) compares the reading values of the current sensor (30) with the values of the flow table, sending the information to the linear valve (23), informing the gas amount that must be released to the system.

The comparative calculations performed by the system are predetermined at the time of the logical description of the software operation together with the microcontroller (20).

The linear actuation valve (23) acts according to the readout of the amount through a current sensor (30), and a gas passage sensor which flows therethrough by informing this current and the current flow rate to the microcontroller (23). If there is a change in current or pressure, the valve opening drive is set to cause the valve (23) opening to remain stable, increasing or decreasing the actuation of linear opening and closing of the actuation. The correction of the gas amount to be released is performed online, that is the current determines the gas amount that will be released based on the data acquired, as well as the flow variation.

The linear actuation valve (23) allows compensating the gas flow in real time according to the ranges of welding machine current or change in flow.

For severe applications where there is excess dirt, oil in the part to be welded, or even in very windy environments, a regulation range has been created where there is a possible increase or decrease of the percentage of gas to be released based on its current.

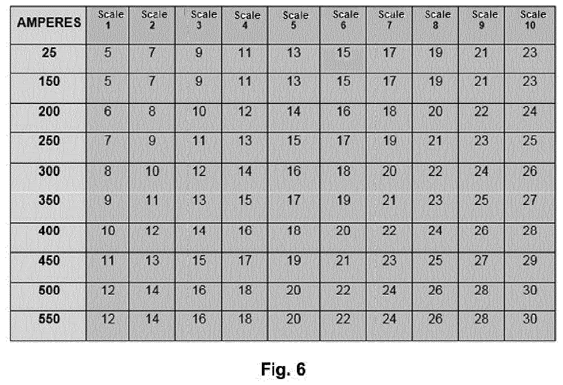

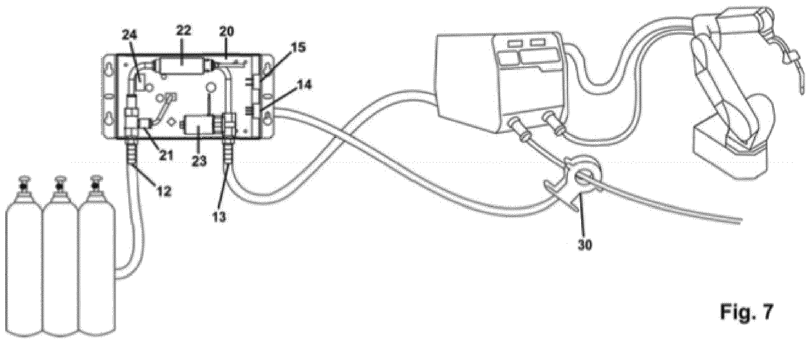

For example, using the range (scale) 01 with a current of 200 A the gas release would be 6 L/min. For the use of the same parameters, however in the range (scale) 05 the gas release becomes 14 L/min. These adjustment ranges are described with reference to Fig. 6.

The system allows to change the regulation ranges and control the gas amount to be released only online mode, through the power port (15) that allows to connect the electronic equipment to the power grid, working with a voltage of 110 V or 220 V.

In offline mode the equipment is switched off and does not allow the use of the regulation and management ranges of the gas flow system, but it informs by means of the numerical display (11) the gas amount that is being directed to the welding equipment. It means that even with the equipment switched off the microcontroller (20) performs the identification of the inlet gas through the flowmeter sensor (22) and straight connection (21).

Readings performed with the equipment in offline mode (switched off) are stored with to the microcontroller (20) and, when the equipment is switched on (online mode), it controls how much was the economy generated in the period.

Therefore, the use of the equipment in the offline or online mode allows greater control of gas flow management used in the welding process, besides allowing the identification of errors due to lack of gas, leakage or low pressure.

Thus, the electronic shielding gas flow regulator system applied in welding equipment, object of the present utility model, has as objective solving the drawbacks identified in the prior art by means of a MIG/MAG/TIG welding gas saving system which verifies through a current sensor (Shunt) (30) the current being used, and the gas flow sensor (22), sending this data to a software processing system that later releases the gas according to the welding current being measured.

## Claims

1. An electronic shielding gas flow regulator system applied in welding equipment describes a welding gas saving system interconnected in the feed line between the gas and the welding equipment, having a base structure (10) provided with inlet (12) and outlet (13) connections of the gas, **characterized in that** a microcontroller board (20) provided with a specific software that performs the gas inlet and outlet readings, either online or offline, analyzing the amount of gas entering the equipment and comparing it with the values of current and flow; the inlet connection (12) directs the gas to the flowmeter sensor (22) and through a straight connection (21) it directs the gas to the microcontroller (20), identifying the amount of gas entering the equipment, demonstrating this information to the user through the numerical display (11) that presents the information both in online and offline mode; the output connection (13) is controlled by a linear actuating valve (23) which promotes the release of the gas according to the information emitted by the microcontroller (20), said microcontroller (20) performing a flow calculation through the parameters received by the flowmeter sensor (22) and straight connection (21) compared to the current calculation issued to the microcontroller (20) via the external current sensor (30) interconnected to the microcontroller (20) near the contact port (14); the software interconnected to the microcontroller (20) compares the reading values of the current sensor (30) with the values of the flow table, sending the information to the linear valve (23), stating the gas amount that must be released to the system; the linear actuation valve (23) allows to compensate the gas flow in real time according to the current variations of the welding machine or pressure change; in offline mode the equipment is switched off and it is not possible to use the regulation and management ranges of the gas flow system, but it informs through the numerical display (11) the gas amount being directed to the welding equipment, that is to say, that even with the equipment off, the microcontroller (20) performs the identification of the inlet gas through the flowmeter sensor (22) and straight connection (21).

2. An electronic shielding gas flow regulator system applied in welding equipment, according to claim 1, **characterized in that** the microcontroller board (20) describes a relay (24) of error information and equipment locking when there is a fault or gas failure, leakage or low pressure, causing the equipment to stop immediately.

3. An electronic shielding gas flow regulator system applied in welding equipment, according to claim 1, **characterized in that** the current sensor (30) is arranged adjacent to the current output of the welding equipment, allowing the microcontroller (20) to receive the current information of the welding equipment and perform the necessary calculations (flow x current) to determine the gas amount to be released for the welding process.

4. An electronic shielding gas flow regulator system applied in welding equipment, according to claim 1, **characterized in that** the microcontroller (20) controls the current or pressure range so as to adjust the valve opening drive to cause the opening of the valve (23) remains stable by increasing or reducing the actuation of the linear opening and closing of the drive, and the correction of the gas amount to be released is performed online, that is, the current determines the gas amount that will be released based on the data acquired, as well as the pressure range.

5. An electronic shielding gas flow regulator system applied in welding equipment, according to claim 1, **characterized in that** the comparative calculations performed by the system are predetermined at the time of the logical description of the software operation with the microcontroller (20).

6. An electronic shielding gas flow regulator system applied in welding equipment, according to claim 1, **characterized in that** the equipment through the power port (15) is connected together with the power grid, operating at a voltage of 110 V or 220 V.

7. An electronic shielding gas flow regulator system applied in welding equipment, according to claim 1, **characterized in that** the microcontroller (20) performs the gas amount reading entering the equipment, either in online or offline mode.
